# FASCICULE DE BREVET EUROPEEN

(11) **EP 0 952 739 B1**
(45) Date de publication et mention de la délivrance du brevet: **11.01.2006**
(21) Numéro de dépôt: 99400954.6
(22) Date de dépôt: 20.04.1999
(51) Int. Cl.: H04N 9/64, H04N 9/77

(54) **Système à lignes à retard chrominance**
Chrominanz-Verzögerungsleitungssystem
Chrominance delay lines system

(30) Priorité: 23.04.1998 FR 9805097
(43) Date de publication de la demande: 27.10.1999
(73) Titulaire: STMicroelectronics S.A., 92120 Montrouge (FR)
(72) Inventeur: Lemaitre, Régis, 38120 Fontanil-Cornillon (FR)
(74) Mandataire: Poulin, Gérard

(56) Documents cités:
- GURP VAN W A J ET AL: "SWITCHED CAPACITOR CHROMINANCE BASE-BAND DELAY LINES FOR COLOUR DECODERS" IEEE TRANSACTIONS ON CONSUMER ELECTRONICS, vol. 33, no. 3, 1 août 1987, pages 451-454, XP000007298

## Description

### Domaine technique

La présente invention concerne un système de traitement de signaux video couleur à lignes à retard chrominance.

### Etat de la technique antérieure

La démodulation des signaux de chrominance des standards de télévision PAL ou SECAM nécessite l'utilisation de lignes à retard (64µs) de ligne. En PAL une telle ligne à retard a pour objet de compenser les erreurs de phase entre les signaux de chrominance U et V, en SECAM elle a pour objet de rétablir la continuité des signaux entre lignes successives. Traditionnellement, une telle ligne à retard, qui peut alors être une ligne à retard piézo-acoustique, est insérée en sous-porteuse avant la démodulation. Par contre, dans les réalisations intégrées, cette ligne à retard fonctionne généralement en bande de base et est insérée après la démodulation.

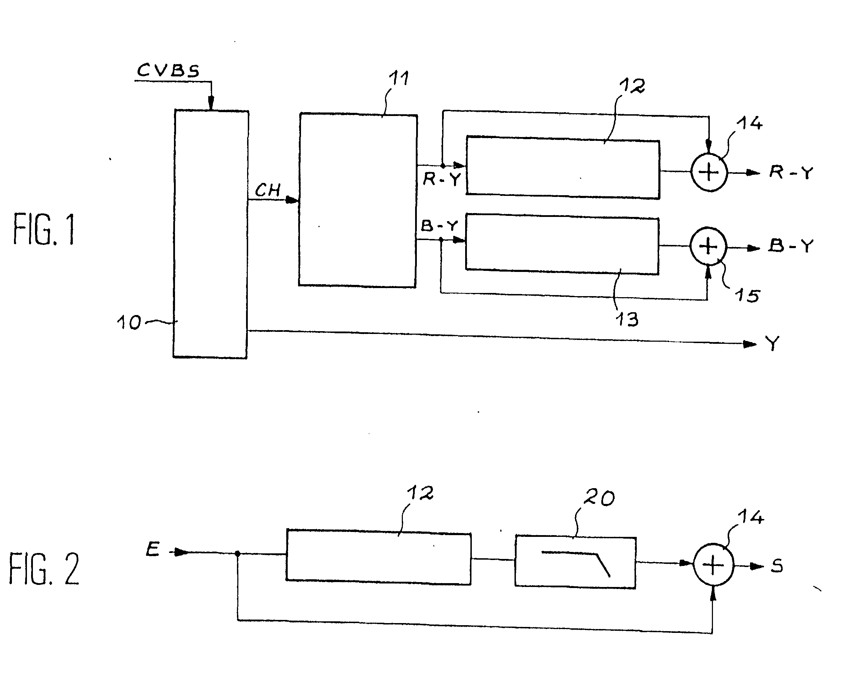

La figure 1, qui correspond à la figure 1 du document référencé [1] en fin de description, illustre schématiquement un démodulateur chrominance à ligne à retard en bande de base de l'art connu. Ce document [1] décrit, en effet, un circuit à ligne à retard en bande de base à capacités commutées utilisé pour des décodeurs chrominance.

Le système illustré sur la figure 1 comprend un filtre passe-bande 10, qui reçoit le signal vidéo composite CVBS (« Composite Vidéo Broadcasting Signal ») et qui délivre le signal de chrominance modulé CH. Il est suivi du décodeur de chrominance 11 dont les deux sorties R-Y et B-Y sont reliées à deux lignes à retard 12 et 13 de retard 64 µs ou de durée d'une ligne. L'entrée et la sortie de chacune de ces lignes à retard sont reliées aux deux entrées d'un additionneur 14, et 15. Une ligne à retard ainsi associée à un additionneur constitue un filtre en peigne. Les maxima d'un tel filtre sont des multiples entiers de la fréquence ligne et les minima des demi-multiples de celle-ci.

Ce circuit à ligne à retard illustré sur la figure 1, qui joue le rôle de filtre en peigne et de mémoire ligne pour les standards PAL et SECAM, peut être réalisé de manière intégrée. Comme décrit dans le document [1], chaque ligne à retard peut être une ligne à retard à capacités commutées. Cette ligne est alors réalisée par échantillonnage multiple et est séquencée par une horloge asservie à la fréquence ligne. L'utilisation d'un système échantillonné exige alors un filtrage continu avant (préfiltrage) et après échantillonnage. Le préfiltrage (ou filtre anti-repliement) n'est pas représenté sur la figure 1. Dans Ce circuit, le signal à retarder est alors échantillonné puis retardé d'environ une durée de ligne dans la ligne à retard. Un filtre continu permet ensuite d'éliminer les résidus horloge. L'addition du signal retardé d'une durée de ligne au signal d'entrée non échantillonné produit la fonction filtre en peigne.

Le circuit de la figure 1 permet d'obtenir les avantages suivants :
- en PAL il permet de réduire les interférences entre signaux de différences de couleurs ;
- en SECAM il permet de réduire la diaphotie (interférences entre signaux de sous-porteuses chrominance en l'absence de couleur, causes de moires) ;
- en NTSC il permet de réjecter les résidus de luminance.

Un tel circuit est donc compatible avec tous les standards.

Le document [2] décrit un décodeur chrominance multistandard, automatique, et intégré utilisant un procédé BICMOS combinant des circuits bipolaires et CMOS. Il décrit, également, une ligne à retard chrominance en bande de base comprenant une série de 192 condensateurs qui sont commutés l'un après l'autre par un générateur d'impulsions séquentiel. Ces 192 condensateurs sont commutés séquentiellement grâce à un registre à décalage à 192 étages, à une ligne d'écriture, puis 64 µsec plus tard à une ligne de lecture. Ces lignes sont synchronisées par une boucle à verrouillage de phase (PLL) à 6 MHz asservie sur la fréquence ligne.

Comme illustré sur la figure 2, il est donc connu de placer un filtre analogique passe-bas 20 d'ordre 2 à 4 en aval de la ligne à retard 12 illustrée sur la figure 1.

Le retard introduit par ce filtre 20 doit alors être pris en compte dans le retard total apporté par la ligne à retard. Une telle réalisation est envisagée dans le document [1].
Le retard apporté par la ligne à retard proprement dite 12 étant lié à la fréquence de l'horloge, les spécifications de ce filtre 20 doivent être à la fois fréquentielles et temporelles. Ces contraintes en rendent la conception difficile et sujette à compromis. Le plus sérieux de ces compromis concerne la réponse impulsionnelle différentielle : en effet, la voie directe (sans ligne à retard) ne subissant pas le même filtrage, les réponses impulsionnelles de la voie directe et de la voie retardée sont différentes. Les temps de transitions (temps de montée et de descente) de la voie directe étant meilleurs que ceux de la voie retardée, l'image subit une dégradation ligne à ligne visible, surtout en SECAM (indentation rouge-bleu dite effet « FL/2 » (fréquence ligne/2) ou « dents de souris »).

La présente invention a pour objet de pallier ces inconvénients, en proposant un système dans lequel la réponse des voies directe et retardée est équilibrée.

### Exposé de l'invention

La présente invention concerne un système selon la revendication 1 de traitement de signaux vidéo permettant la démodulation de signaux de télévision PAL ou SECAM avec des lignes à retard chrominance, ce système comprenant une première et une seconde ligne à retard recevant respectivement les signaux de sortie du démodulateur de chrominance, caractérisé en ce que les sorties de la première et de la seconde lignes à retard sont reliées à une première entrée respectivement d'un premier et d'un second additionneurs au travers d'un premier filtre passe-bas de lissage, les entrées de la première et de la seconde lignes à retard sont reliées respectivement à une seconde entrée du premier et du second additionneurs au travers d'un second filtre passe-bas continu de compensation. Ce second filtre remplit la fonction d'équilibrage de la réponse impulsionnelle.

Dans un second mode de réalisation, le système de l'invention comprend, pour chaque ligne à retard, un troisième filtre disposé entre la sortie de la ligne à retard et la première entrée de l'additionneur correspondant, et un quatrième filtre passe-bas disposé en sortie de l'additionneur.

Avantageusement le troisième filtre est un filtre passe-tout permettant de compenser le retard excédentaire apporté par le premier filtre dans la voie directe, sans modifier la réponse fréquentielle. Le quatrième filtre apporte une réjection complémentaire des résidus d'échantillonnage et de sous-porteuses.

L'invention concerne également un circuit intégré de traitement télévision comprenant le système défini ci-dessus.

### Brève description des dessins

- La figure 1 illustre un démodulateur chrominance à ligne à retard en bande de base de l'art connu ;
- la figure 2 illustre une variante de réalisation du démodulateur de la figure 1 ;
- la figure 3 illustre un premier mode de réalisation du système de l'invention ;
- la figure 4 illustre un second mode de réalisation du système de l'invention.

### Exposé de modes de réalisation

Comme décrit ci-dessus, le système de l'invention comprend une première voie échantillonnée comportant au moins un filtre passe-bas continu 20 de lissage et de réjection des résidus horloges, et une seconde voie non échantillonnée dans laquelle, selon l'invention, on introduit un filtre passe-bas continu 21 de compensation de manière à équilibrer la réponse impulsionnelle de ces deux voies.

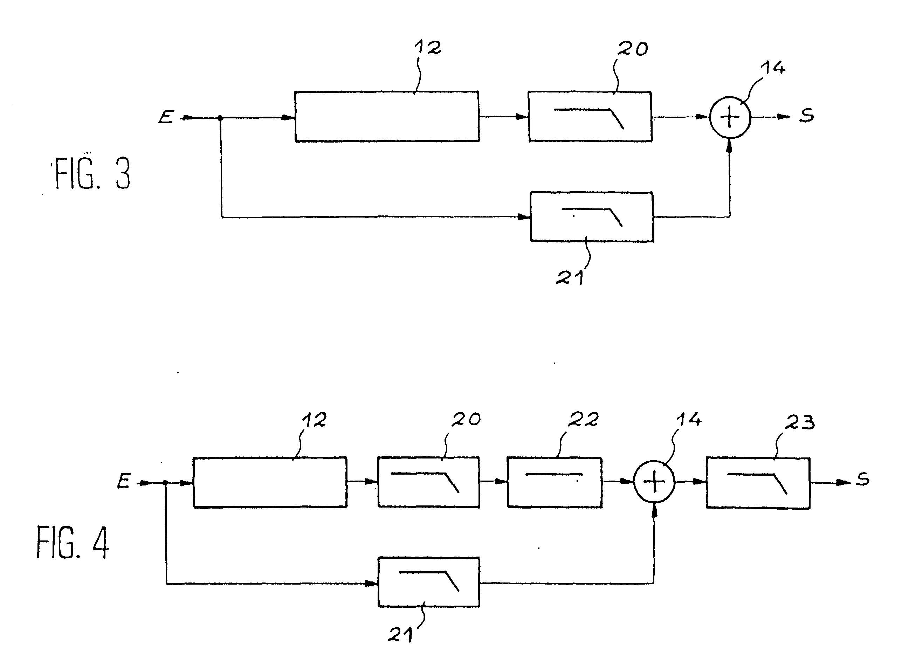

Ainsi dans un premier mode de réalisation, pour équilibrer la réponse des voies directe et retardée, telles qu'illustrées sur la figure 2, on introduit dans la voie directe le filtre passe-bas continu 21 de compensation, comme illustré sur la figure 3.

Mais l'introduction de ce filtre passe-bas 21 apporte un retard supplémentaire.

Un second mode de réalisation du système de l'invention permet de compenser ce retard, de la façon suivante :
- Un retard est ajouté à la voie retardée car c'est la différence de retard entre les deux voies qui doit être ajustée précisément à 64 µs. On peut également obtenir ce résultat par ajustage des paramètres du filtre 20 de la voie retardée, mais celui-ci risque alors de ne plus satisfaire aux exigences initiales.
- Le retard total de la voie directe est minimisé, car il a des conséquences défavorables sur la conception des circuits de luminance du téléviseur.

Ce second mode de réalisation, illustré sur la figure 4, fait appel à quatre filtres 20, 21, 22 et 23. Il perrnet de contrôler tous les paramètres.

Ces filtres sont les suivants :
- le filtre passe-bas 20 est le filtre de lissage ;
- le filtre passe-bas 21 de compensation est le filtre d'équilibrage de la réponse impulsionnelle ;
- le filtre 22 est un filtre passe-tout d'ajustage du délai total permettant de compenser le retard excédentaire apporté par le filtre 21 dans la voie directe, sans modifier la réponse fréquentielle ;
- le filtre passe-bas 23 est un filtre complémentaire de réjection des résidus d'horloge et de sous-porteuse ;

Dans un exemple de mise en oeuvre, le premier mode de réalisation du système de l'invention est incorporé dans un circuit complexe de traitement télévision. La fréquence d'échantillonnage est de 3 MHz, le filtre passe-bas 20 est de type Butterworth d'ordre 4 avec une fréquence de coupure à 1 MHz, le filtre passe-bas de compensation 21 est un filtre de premier ordre avec une fréquence de coupure à 2 MHz.

On obtient alors les avantages suivants, pour des signaux d'entrée dont les temps de transition s'établissent en 300 nS :

| | | Réalisation de l'art connu illustrée sur la figure 2 | Réalisation de l'invention illustrée sur la figure 3 |
|---|---|---|---|
| Temps de transitions | voie directe | 300 nS | 370 nS |
| | voie retardée | 500 nS | 430 nS |
| | différence | 200 nS | 60 nS |
| Atténuation à 1 MHz | voie directe | 0 dB | 1 dB |
| | voie retardée | 3,7 dB | 1,7 dB |
| Atténuation à 3 Mhz | voie directe | 0 dB | 5 dB |
| (Fréquence d'échantillonnage) | voie retardée | 20 dB | 35 dB |
| Atténuation à 6 Mhz | voie directe | 0 dB | 10 dB |
| (Harmonique deux de la fréquence d'échantillonnage) | voie retardée | 40 dB | 60 dB |

Ainsi, malgré l'utilisation de seulement deux filtres 20 et 21, les performances du système de l'invention, illustré sur la figure 3, sont fortement améliorées par rapport au système de l'art connu, illustré sur la figure 2.

### RÉFÉRENCES

[1] « Switched Capacitor Chrominance Base-Band Delay Lines For Colour Decoders » de Waj Van Gurp, Ajj Boudewijns et Afcw Van Keeken (IEEE Transactions On Consumer Electronics, volume CE-33, numéro 3, août 1987)
[2] « A Full Integrated Automatic Multistandard Chroma Decoder » de Michel Imbert, Gérard Bret, Regis Lemaitre et Pascal Debaty (IEEE Transactions On Consumer Electronics, volume 37, numéro 3, août 1991)

## Revendications

1. Système de traitement de signaux vidéo couleur permettant la démodulation de signaux de télévision PAL ou SECAM avec des lignes à retard chrominance, ce système comprenant une première et une seconde lignes à retard (12, 13) recevant respectivement les signaux de sortie (R-Y, B-Y) d'un démodulateur de chrominance (11), **caractérisé en ce que** les sorties de la première et de la seconde lignes à retard (12, 13) sont reliées à une première entrée respectivement d'un premier et d'un second additionneurs (14, 15) au travers d'un premier filtre passe-bas (20) de lissage, les entrées de la première et de la seconde lignes à retard (12, 13) sont reliées respectivement à une seconde entrée du premier et du second additionneurs au travers d'un second filtre passe-bas continu (21) de compensation, de manière à équilibrer la réponse impulsionnelle.

2. Système selon 1a revendication 1 comprenant, pour chaque ligne à retard (12), un troisième filtre passe-tout (22) disposé entre la sortie de la ligne à retard (12) et la première entrée de l'additionneur correspondant (14).

3. Système selon la revendication 1 comprenant, pour chaque ligne à retard, un quatrième filtre passe-bas (23) disposé en sortie de l'additionneur(14).

4. Circuit intégré de traitement télévision comprenant le système selon l'une quelconque des revendications précédentes.

## Patentansprüche

1. Videofarbsignal-Verarbeitungssystem, das die Demodulation von PAL- oder SECAM-Fernsehsignalen mit Chrominanz-Verzögerungsleitungen ermöglicht, wobei dieses System eine erste und eine zweite Verzögerungsleitung (12,13) umfasst, die jeweils Ausgangssignale (R-Y, B-Y) eines Chrominanz-Demodulators empfangen,
**dadurch gekennzeichnet, dass** die Ausgänge der ersten und der zweiten Verzögerungsleitung (12,13) jeweils mit einem ersten Eingang einer ersten und einer zweiten Additionsschaltung (14,15) über ein erstes Tiefpass-Glättungsfilter (20) verbunden sind, und die Eingänge der ersten und der zweiten Verzögerungsleitung (12,13) jeweils mit einem zweiten Eingang der ersten und zweiten Additionsschaltung über ein zweites Tiefpassfilter (21) mit kontinuierlichem Ausgleich verbunden sind, um die Impulsantwort bzw. das Impuls-Ansprechverhalten auszugleichen.

2. System nach Anspruch 1, das für jede Verzögerungsleitung (12) ein drittes Voll- bzw. Hochpassfilter (filtre passe-tout) (22) umfasst, das zwischen dem Ausgang der Verzögerungsleitung (12) und dem ersten Eingang der entsprechenden Additionsschaltung (14) angeordnet ist.

3. System nach Anspruch 1, das für jede Verzögerungsleitung ein viertes Tiefpassfilter (23) umfasst, das am Ausgang der Additionsschaltung (14) angeordnet ist.

4. Integrierte Schaltung zur Fernsehsignalverarbeitung mit dem System gemäß einem der vorangehenden Ansprüche.

## Claims

1. Colour video signal processing system permitting the demodulation of PAL or SECAM television signals with chrominance delay lines, said system comprising a first and a second delay lines (12 13) respectively receiving the output signals R-Y, B-Y of a chrominance demodulator (11), **characterized in that** the outputs of the first and second delay lines (12 13) are connected to a first input respectively of a first and a second adders (14, 15) across a first low-pass smoothing filter (20), the inputs of the first and second delay lines (12, 13) being connected respectively to a second input of the first and second adders across a second continuous low-pass compensation filter so as to balance the pulse response.

2. System according to claim 1 comprising a third wide-pass filter (22) placed between the output from the delay line (12) and the first input of the corresponding adder (14), for each delay line (12).

3. System according to claim 1 comprising a fourth low-pass filter (23) placed at the output from the adder (14), for each delay line.

4. Integrated television processing circuit comprising the system according to any one of the preceding claims.
